# FASCICULE DE BREVET EUROPEEN

(11) **EP 2 504 205 B1**
(45) Date de publication et mention de la délivrance du brevet: **17.02.2016**
(21) Numéro de dépôt: 10799092.1
(22) Date de dépôt: 22.11.2010
(51) Int. Cl.: B60S 1/52, B60S 1/38

(54) **BALAI D'ESSUIE-GLACE INTÉGRANT UN CONDUIT DE LIQUIDE DE LAVAGE**
SCHEIBENWISCHERBLATT MIT INTEGRIERTEM WASCHFLÜSSIGKEITSKANAL
WINDSCREEN-WIPER BLADE HAVING A BUILT-IN WASHING LIQUID CONDUIT

(30) Priorité: 23.11.2009 FR 0958272
(43) Date de publication de la demande: 03.10.2012
(73) Titulaire: Peugeot Citroën Automobiles SA, 78140 Vélizy Villacoublay (FR); MGI Coutier, 01410 Champfromier (FR)
(72) Inventeur: JEUFFE, Gérard, F-78580 Bazemont (FR); HAMZA, Brahim, F-07500 Guilherand-Granges (FR); ISSARTEL, Jean-Michel, F-26100 Romans Sur Isère (FR); BOUGUERRA, Akim, Driss, F-69100 Villeurbanne (FR); EMAILLE, Rodolphe, F-38260 La Côte St André (FR)
(74) Mandataire: Ménès, Catherine
(86) Numéro de dépôt international: PCT/FR2010/052483
(87) Numéro de publication internationale: WO 2011/061460

(56) Documents cités:
- EP-A1- 1 918 167
- DE-U- 7 005 624
- FR-A1- 2 603 850
- FR-A1- 2 648 771
- FR-A1- 2 933 933
- GB-A- 410 259
- US-A- 4 811 451
- US-A- 5 539 951
- US-A1- 2003 019 066

## Description

La présente invention est relative à un balai d'essuie glace dont la caractéristique essentielle réside dans le fait qu'il comporte au moins à une de ses extrémités un conduit équipé d'un gicleur intégré dans le capuchon du balai d'essuie glace.

Dans l'état de la technique, le nettoyage d'un pare brise ou d'une lunette arrière s'effectue classiquement en pulvérisant un fluide de lavage sur la surface vitrée à l'aide de gicleurs disposés sur le capot du véhicule ou sur la grille d'auvent du véhicule. Ces gicleurs implantés à distance de la surface vitrée à nettoyer sont très délicat à régler pour obtenir une pulvérisation efficace. Ces gicleurs dits fluidiques projettent sous forme d'un spray du liquide de lavage sur toute la majeure partie de la surface vitrée. Cette opération de lavage utilise un volume de fluide important et masque pendant quelques secondes la visibilité au conducteur. Par conséquent, cette opération peut s'avérer très dangereuse par les risques potentiels qu'elle pourrait impliquer. De plus, suivant la vitesse du véhicule, la projection du jet est variable, par exemple, à vitesse élevée, le jet est projeté uniquement en partie inférieure de la surface vitrée ce qui fournit naturellement un nettoyage insuffisant de la dite surface vitrée. En outre, on comprend que le système de lavage est donc conçu spécifiquement pour chaque type de véhicule, ce qui entraîne des coûts de développements notables.

Dans tous les cas le liquide de lavage est projeté directement sur la surface vitrée soit sous forme de spray, soit sous forme de projection en avant du balai, réparti en nappes de façon irrégulières et discontinues.

Dans l'état de la technique, nous connaissons notamment le document DE1755762, décrit un dispositif de projection de liquide de lavage par rapport à un mécanisme d'essuyage d'un pare brise. Le mécanisme comporte un balai essuie glace monté mobile en balayage par rapport à la surface vitrée et comporte classiquement un ensemble support longitudinal et une raclette d'essuyage.

Le dispositif de projection est constitutif du bras sur lequel est monté le balai et est adapté relativement au balai afin que la projection du fluide de lavage sous la forme d'un jet soit projeté en avant de la lèvre de la raclette par rapport à son mouvement de balayage.

Le document FR2916716 propose un agencement d'un dispositif de projection de fluide de lavage. La buse de projection du fluide de lavage est placée en bout et à l'extérieur de la raclette, précisément dans l'axe de sa partie médiane de façon à pulvériser alternativement durant son mouvement de balayage, un jet de fluide sur la surface vitrée à l'avant de la lèvre de la raclette.

Le document EP 0860336 propose une raclette reliée de façon classique à un bras d'essuie glace mobile pour effectuer le nettoyage d'une surface vitrée. La raclette comporte dans sa partie inférieure la lèvre et dans sa partie supérieure des moyens de fixation à une monture et un canal s'étendant longitudinalement à l'intérieur de la raclette afin de véhiculer un fluide de lavage jusqu'à une pièce terminale, à chacune des extrémités de la raclette, possédant un embout d'alimentation en fluide introduit dans le canal de la raclette. L'embout d'alimentation est positionné dans l'axe de la pièce terminale comportant des pièces terminales sous forme de conduits en vé inversé dont les buses de sortie des extrémités de la raclette sont dirigées en vis-à-vis de manière à délivrer un jet sous forme de spray à une distance variable de la raclette selon l'angle du vé sur la surface vitrée de part et d'autre de la raclette, les jets se croisant dans le plan passant à mi longueur de la raclette.

Le document FR2648771 propose un balai d'essuie-glace distributeur de liquide de nettoyage comportant une rampe de distribution percée à intervalles réguliers d'orifices jouant le rôle de gicleurs.

Le document US 55 399 51 A décrit un balai d'essuie-glace avec un gicleur disposé à l'extrémité d'un tube recourbé.

L'invention a pour but de proposer un balai d'essuie glace et un dispositif de lavage et d'essuyage permettant de s'affranchir de ces inconvénients notamment en supprimant les réglages fastidieux et en assurant une visibilité nettement améliorée au conducteur durant l'opération de lavage et d'essuyage de la surface vitrée.

Dans ce but, l'invention consiste à positionner le gicleur en sortie de conduit au plus près de la lèvre de la raclette, en incorporant le conduit dans le capuchon du balai d'essuie glace. Avant son retournement, la lèvre du balai d'essuie glace forme une concavité sur toute sa longueur, le jet cylindrique de liquide de lavage émis par le gicleur se répand uniformément dans la concavité sur la majeure partie de la lèvre de la raclette du balai d'essuie glace. Après retournement, le liquide réparti uniformément entre la lèvre du balai d'essuie glace et la surface vitrée permet un essuyage et un nettoyage optimisé sans aucune gêne pour la visibilité au conducteur.

A cet effet, le balai d'essuie glace, de véhicule automobile, comportant une raclette souple allongée, au moins une extrémité de la raclette est recouverte par un capuchon qui intègre un conduit équipé d'un gicleur décalé sur le côté de la lèvre de la raclette souple par rapport au plan médian longitudinal de la dite raclette souple caractérisé en ce que l'axe du gicleur est orienté en direction de la lèvre de la raclette de manière à diriger le fluide de lavage sur la lèvre de la raclette lorsque celle-ci est dans sa position d'arrêt, avant son retournement en vue d'effectuer l'essuyage de la surface vitrée.

Selon d'autres caractéristiques avantageuses de l'invention :
- Le capuchon comporte deux branches dissymétriques par rapport au plan médian de la lèvre de la raclette, ce qui permet d'incorporer le conduit dans la branche la plus grande.
- Le conduit est disposé dans la branche du capuchon qui se prolonge en partie inférieure de sorte que l'orifice de sortie du gicleur est positionné au voisinage de la lèvre de la raclette ce qui permet d'obtenir un meilleur positionnement du conduit décalé sur le bord de la raclette..
- la branche du capuchon portant le gicleur se prolonge jusqu'au voisinage de la lèvre de la raclette, ce qui permet un placement et une orientation au plus juste du gicleur par rapport à la lèvre de la raclette.
- Le raccord est en saillie de manière à dépasser du fond du capuchon afin de rattacher la canalisation d'arrivée de liquide de lavage, ce qui facilite le montage de la canalisation.
- Avantageusement, le raccord vient de matière avec le capuchon, ce qui est plus facile à fabriquer.
- Selon un autre avantage, le gicleur est complètement situé à l'intérieur du conduit, ce qui évite des dérèglements intempestifs lorsque le gicleur est en saillie par choc ou contact.
- En outre, le conduit recevant le gicleur comporte un chanfrein évasé vers la sortie et affleurant sur le coté de la branche ce qui permet un meilleur écoulement du liquide de lavage.

L'invention concerne également un dispositif de lavage et d'essuyage comportant au moins un balai d'essuie glace d'une surface vitrée selon l'invention.

L'invention à également pour objet un véhicule automobile comportant au moins un dispositif de lavage et d'essuyage d'une surface vitrée selon la présente invention.

D'autres caractéristiques d'un balai d'essuie-glace réalisé conformément à l'invention, apparaîtront encore à travers la description qui suit de plusieurs exemples de réalisation donnés à titre indicatif et non limitatif en référence aux dessins annexés sur lesquels :
- La figure 1 est une vue en perspective d'un ensemble d'essuyage et de lavage d'une surface vitrée conforme à l'invention en position inactive.
- La figure 2 est une section de profil en section A-A de la figure 4 d'un balai d'essuie glace équipé d'un support et de son gicleur selon l'invention où la lèvre la raclette est représentée dans une position neutre dans le plan médian longitudinal.
- La figure 3 est une vue de profil en section A-A de la figure 4 d'un balai d'essuie glace en appui sur une surface vitrée suivant l'invention.
- La figures 4 est une vue en perspective de l'extrémité d'un balai d'essuie vitre équipé d'un capuchon suivant l'invention.
- La figure 5 est une vue en plan éclatée de l'extrémité d'un balai d'essuie glace équipé d'un capuchon suivant l'invention.
- La figure 6 est une vue de dessus en coupe B-B de la figure 2 de l'extrémité d'un balai d'essuie glace équipé d'un capuchon montrant le détail du conduit équipé de son gicleur qui ne fait pas partie de l'invention.

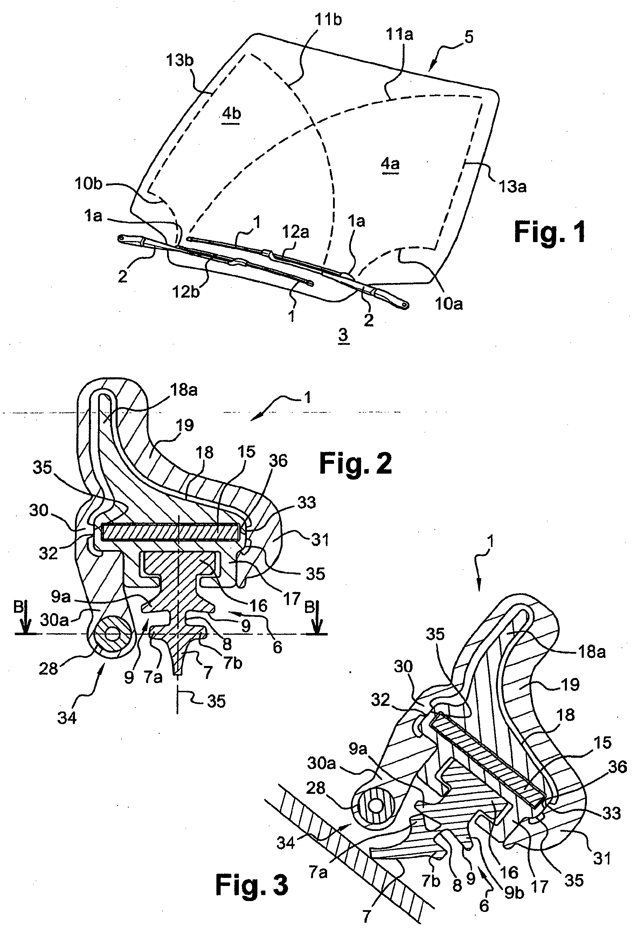

La figure 1 montre une vue en perspective d'un ensemble d'essuyage et de lavage d'une surface vitrée comprenant une paire de balai d'essuie glace conforme à l'invention en position inactive. Sur cette vue les balais d'essuie glace 1 sont montés de façon classique sur un bras 2 par une articulation sensiblement disposée dans la partie médiane du balai d'essuie glace 1. A l'autre extrémité les bras 2 sont fixés sur des moyens moteurs liés à la carrosserie 3 afin que les balais parcourt simultanément les zones à essuyer 4a-4b sur la surface vitrée tel que par exemple un pare brise 5. Sur la figure, les balais d'essuie glace 1 sont représentés dans leurs positions inactives c'est à dire dans une position parallèles entre elles et sensiblement parallèle à la bordure inférieure du pare brise. Les balais d'essuie glaces tels que représentés sur la figure sont dit antagonistes car ils se déplacent dans un mouvement opposé l'un par rapport à l'autre. Les balais d'essuie glaces peuvent également se déplacer parallèlement l'un par rapport à l'autre ou bien un seul essuie glace peut être disposé pour essuyer une zone du pare brise ou d'une lunette arrière ou bien encore des projecteurs. Toutes ces variantes de moyens d'essuyage n'affectent en aucune façon le principe de fonctionnement du balai d'essuie glace suivant l'invention qui sera décrit ultérieurement. Les balais d'essuie glace 1 représentés sur la figure comportent à leurs extrémités inférieures sur un embout terminal 1 a adapté et dans une position parallèle, à la raclette des balais d'essuie glaces, un conduit équipé d'un gicleur, placé du côté de la zone à essuyer et permettant de délivrer un jet de liquide de lavage sur la lèvre de la raclette du balai d'essuie glace. Les gicleurs placés sur la partie inférieure du balai décrivent par rapport à l'axe de rotation du bras un petit rayon 10a-10b lors du balayage de la zone à essuyer, tandis que l'extrémité supérieure du balai décrit un grand rayon 11a-11b. Le débattement des balais entre leurs positions 12a-12b parallèle à la bordure inférieure du pare brise et leurs positions 13a-13b sensiblement parallèle à la bordure latérale du pare brise définit les zones 4a-4b à essuyer. Un gicleur pourrait également être éventuellement monté à l'extrémité supérieure du balai d'essuie glace, placé à l'inverse du gicleur placé à l'extrémité inférieure, c'est à dire placé du côté de la zone à essuyer lorsque le balai se trouve en fin de course c'est-à-dire sa position vertical quand le balai est sensiblement parallèle au bord latéral du pare brise.

Afin d'intégrer harmonieusement le conduit équipé d'un gicleur au balai d'essuie glace 1 d'un véhicule automobile, le dit conduit équipé d'un gicleur est incorporé dans le capuchon 19. Ainsi, dans une phase de fonctionnement, le balai d'essuie glace comportant une raclette souple 6, allongée, en appui sensiblement perpendiculaire sur une surface vitrée 5 à balayer, notamment celle d'un pare brise ou d'une lunette arrière des véhicules, les capuchons 19 d'extrémité de la raclette 6 incorpore un conduit équipé d'un gicleur, décalé par rapport à l'axe longitudinal médian de la raclette d'une distance déterminée afin de projeter du liquide de lavage sur la majeure partie de la longueur de la lèvre 7 de la raclette 6 du balai d'essuie glace 1. C'est-à-dire que la position du conduit équipé de son gicleur est rigoureusement placée par rapport à la lèvre de la raclette de manière qu'en position inactive sur une surface vitrée la concavité de la lèvre soit en regard du gicleur.

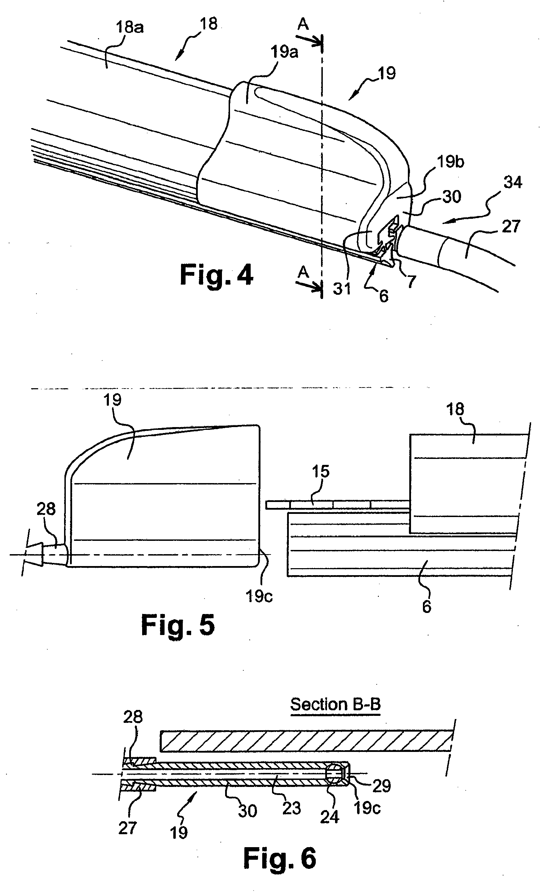

La figure 2 est une section de profil en section A-A de la figure 4 d'un balai d'essuie vitre équipé d'un support et de son gicleur selon l'invention où la lèvre la raclette est représentée dans une position neutre dans le plan médian longitudinal.

Le balai d'essuie glace 1 illustré sur la figure, comporte essentiellement une raclette 6 souple, allongée, en caoutchouc ou matériau similaire approprié à son usage pour le nettoyage d'une surface vitrée 5 contre laquelle s'applique la lèvre 7 de la raclette 6, notamment constituée par la surface du pare brise avant ou de la lunette arrière d'un véhicule automobile.

Cette surface vitrée 5 visible sur la figure 1 présente usuellement une courbure plus ou moins prononcée selon l'emplacement parcouru par le balai d'essuie glace 1 lors de ses déplacements au contact de celle-ci, sur laquelle le balai d'essuie glace 1 suivant l'invention s'adapte parfaitement. En position inactive, la lèvre 7 de la raclette 6 en appui sensiblement horizontal dans le sens longitudinal sur le pare brise 5 monté sur la carrosserie en position inclinée, forme une concavité sur sa longueur orientée vers le haut. Dans cette configuration le talon d'appui 7a de la lèvre vient en appui sur le talon 9a de l'armature 9 de la raclette 1. Le balai d'essuie glace 1 est communément constituée d'une raclette 6 comportant dans sa partie inférieure une lèvre 7 articulée autour d'une charnière 8 et dans sa partie supérieure une ossature 18 de maintien de la raclette 6, renforcée par une vertèbre 15 noyée dans l'ossature en polymère. La raclette 6 possède dans sa partie supérieure un tenon 16 qui vient s'assembler dans une mortaise 17 ménagée dans la partie inférieure de l'ossature 18. Cette ossature 18 possède une paroi s'amenuisant progressivement dans un plan vertical pour former un déflecteur 18a. L'ossature 18 comporte des moyens de raccordements articulés (non représentés) au bras 2. Afin d'améliorer l'aspect global du balai d'essuie glace 1, des capuchons 19 enjoliveurs sont montés à chacune des extrémités des balais d'essuie glace. Les capuchons 19 viennent recouvrir les extrémités de l'ossature 18 et en partie de la raclette 6 afin de renforcer la qualité perçue. Afin de positionner l'axe du conduit 28 dans une position parallèle à l'axe de la raclette 6 à une distance telle que celui-ci se trouve en vis-à-vis de la concavité de la lèvre 7 de la raclette 6 lorsque celle-ci est en position inactive (visible sur la figure 3). Les capuchons 19 ont la forme générale du profil de l'ossature 18 qu'ils viennent coiffer à chaque extrémité. En particulier, dans leur partie inférieure, ils possèdent deux branches sensiblement en forme de C 30-31 placé en vis-à-vis permettant de les guider et d'enserrer la partie courante de l'ossature 18, des protubérances 32-33 sont disposées dans le creux des C d'exercer un serrage sur les flancs 35-36 de l'ossature 18 lors du montage par coulissement des capuchons 19. La branche 30 se prolonge en partie inférieure 30a et incorpore avec une orientation précise en adéquation avec la position de la lèvre 7 de la raclette 6, un ensemble 34 conduit et gicleur. Cette ensemble 34 permet de délivrer un jet de liquide de lavage sur la lèvre 7 de la raclette 6 du balai d'essuie glace 1. Du fait du guidage précis du capuchon lors de son montage sur le balai d'essuie glace, l'ensemble 34 conduit et gicleur est positionnée de façon décalée et rigoureusement précise par rapport à la lèvre 7 de la raclette 6.

Sur cette figure, on a représenté, le balai d'essuie glace 1 comprenant la raclette 6, dans une position neutre, c'est-à-dire dans une position où le balai d'essuie vitre 1 ne repose pas sur la surface vitrée 5 ou bien n'est pas monté sur son bras et ne subit aucune contrainte ou d'effort, en particulier la lèvre 7 de la raclette 6 est placée dans le plan médian longitudinal de la dite raclette 6, symbolisé par l'axe 35.

La figure 3 est une section de profil d'un balai d'essuie vitre suivant l'invention représenté en position inactive tel qu'il serait positionné sur une surface vitrée 5. Cette surface vitrée 5 présente usuellement une courbure plus ou moins prononcée selon l'emplacement parcouru par le balai d'essuie glace 1 lors de ses déplacements au contact de celle-ci, sur laquelle le balai d'essuie glace 1 suivant l'invention s'adapte parfaitement. En position inactive, la lèvre 7 de la raclette 6 en appui sensiblement horizontal dans le sens longitudinal sur le pare brise 5 monté sur la carrosserie en position inclinée, forme une concavité sur sa longueur orientée vers le haut. Dans cette configuration le talon d'appui 7a de la lèvre 7 vient en appui sur le talon 9a de l'armature 9 de la raclette 6. Le balai d'essuie glace 1 est communément constituée d'une raclette 6 comportant dans sa partie inférieure une lèvre 7 articulée autour de la charnière 8 et dans sa partie supérieure une ossature 18 de maintien de la raclette 6, renforcée par une vertèbre 15 noyée dans l'ossature en polymère. Lors de l'inversion du mouvement d'essuyage la lèvre 7 de la raclette 6 subit une rotation autour de la charnière 8. On comprend à l'appui de la figure que la raclette 6 est dans sa position d'arrêt et de repos avant retournement. Dès la mise en mouvement de l'essuyage, la lèvre 7 de la raclette 6 va subir une rotation et le talon d'appui 7b de la lèvre 7 va venir en appui sur le talon 9b de l'armature 9 de la raclette 6.

La figure 4 est une vue en perspective de l'extrémité d'un balai d'essuie vitre 1 équipé d'un capuchon 19 suivant l'invention. Cette vue montre la partie courante du balai d'essuie glace 1 comprenant l'ossature 18 et son déflecteur 18a ainsi que la raclette 6 comprenant la lèvre 7. Le capuchon 19 coiffe l'extrémité de l'ossature 18 et il comporte également un embryon de déflecteur 19a se raccordant par une courbure harmonieuse à son extrémité fermée par un fond 19b. La branche 31 du capuchon 19 enserre l'ossature 18, tandis que l'autre branche 30 enserre également le capuchon 19 mais se prolonge en partie inférieure pour recevoir un ensemble 34 conduit 23 et gicleur 24. La figure montre en particulier la canalisation 27 permettant de véhiculer le liquide de lavage en direction du gicleur. Cette disposition d'intégration de l'ensemble 34 conduit gicleur au capuchon 19 permet d'une part de s'affranchir de réglage fastidieux et d'autre part lors d'un changement de balais usé de décoiffer le capuchon 19 de l'ancien balai d'essuie glace 1 pour le recoiffer sur le nouveau balai d'essuie glace. On comprend bien que cette opération est très aisée à réaliser. A l'extrémité du capuchon 19, à travers une ouverture profilée, nous percevons la raclette 6.

La figure 5 est une vue en plan éclatée de l'extrémité d'un balai d'essuie glace 1 équipé d'un capuchon 19 suivant l'invention. Cette vue montre sur un même alignement l'empilage de l'extrémité des pièces d'un balai d'essuie glace 1 comprenant respectivement l'ossature 18 et dépassant fonctionnellement de celle-ci la vertèbre 15 de rigidification et la raclette 6. Le capuchon 19 vient coiffer l'extrémité de l'ensemble ossature 18, vertèbre 15 et raclette 6, à cet effet, l'extrémité de la raclette 6 sert de moyen de guidage afin d'engager le capuchon 19 par simple coulissement, comme cela a été décrit précédemment. Puis en dernier lieu, on vient introduire la canalisation 27 sur le raccord 28.

La figure 6 est une vue de dessus en section B-B de la figure 2 de l'extrémité d'un balai d'essuie glace équipé d'un capuchon 19 montrant le détail du conduit équipé de son gicleur ménagé dans la branche 30 du capuchon 19. Sur cette vue, nous voyons que le conduit 23 et le gicleur 24 de forme sphérique sont parfaitement intégrés dans la branche 30 du capuchon 19, un chanfrein 29 est uniquement prévu à la sortie du gicleur 24. Aucun élément ou pièce supplémentaire ne se trouve en saillie à l'extrémité de la branche 30 d'où le jet de fluide est répandu vers la raclette 6. A l'autre extrémité de la branche 30, le raccord 28 en saillie permet de connecter la canalisation 27 de transfert du liquide de lavage vers le gicleur.

Le concept a été décrit pour un capuchon 19 spécifiquement monté à l'extrémité inférieure d'une ossature 18 de balai d'essuie glace 1, mais ce concept peut s'appliquer également au capuchon coiffant l'extrémité supérieure de l'ossature 18 du balai d'essuie glace 1 bien entendu en tenant compte des effets de symétrie.

Ainsi le balai d'essuie glace suivant l'invention rassemble sur un seul concept les fonctions d'essuyage et de lavage tout en conservant une qualité perçue notable. Ce concept permet à la fois le lavage et l'essuyage d'un pare brise en toute discrétion et efficacement en améliorant sensiblement la vision du conducteur.

Bien entendu, il va de soi que l'invention ne se limite pas au seul exemple de réalisation plus spécialement décrit et représenté en référence aux dessins annexés ; elle en embrasse au contraire toutes les variantes définies par les revendications.

## Revendications

1. Balai d'essuie-glace (1) de véhicule automobile, comportant une raclette souple (6) allongée, au moins une extrémité de la raclette (6) étant recouverte par un capuchon (19) qui intègre un conduit (23) équipé d'un gicleur (24) décalé sur le côté de la lèvre (7) de la raclette souple (6) par rapport au plan médian longitudinal de la dite raclette souple (6) **caractérisé en ce que** l'axe du gicleur (24) est orienté en direction de la lèvre (7) de la raclette (6) de manière à diriger le fluide de lavage sur la lèvre (7) de la raclette (6) lorsque celle-ci est dans une position d'arrêt, avant retournement lors de l'essuyage de la surface vitrée (5).

2. Balai d'essuie-glace (1) selon la revendication 1, **caractérisé en ce que** le capuchon (19) comporte deux branches (30) (31) dissymétriques par rapport au plan médian de la lèvre de la raclette.

3. Balai d'essuie-glace (1) selon la revendication 2, **caractérisé en ce que** la branche (30) du capuchon (19) portant le gicleur (24) se prolonge jusqu'au voisinage de la lèvre (7) de la raclette (6).

4. Balai d'essuie-glace (1) selon l'une quelconque des revendications 1 à 3, **caractérisé en ce que** le raccord (28) est en saillie de manière à dépasser du fond du capuchon(19).

5. Balai d'essuie-glace (1) selon la revendication 4, **caractérisé en ce que** le raccord (28) vient de matière avec le capuchon (19).

6. Balai d'essuie-glace (1) selon l'une quelconque des revendications 1 à 5, **caractérisé en ce que** le gicleur (24) est complètement situé à l'intérieur du conduit (23).

7. Balai d'essuie-glace (1) selon l'une quelconque des revendications 1 à 6, **caractérisé en ce que** le conduit (23) recevant le gicleur (24) comporte un chanfrein (29) évasé vers la sortie et affleurant du coté (19c) de la branche (30).

8. Dispositif de lavage et d'essuyage **caractérisé en ce qu'**il comporte au moins un balai d'essuie-glace (1) d'une surface vitrée (5) selon la revendication 1 à 7.

9. Véhicule automobile **caractérisé en ce qu'**il comporte au moins un dispositif de lavage et d'essuyage d'une surface vitrée (5) selon la revendication 8.

## Patentansprüche

1. Scheibenwischerblatt (1) für ein Kraftfahrzeug, einen flexiblen länglichen Wischgummi (6) umfassend, wobei zumindest ein Ende des Wischgummis (6) mit einer Schutzkappe (19) bedeckt ist, in die eine Leitung (23) integriert ist, die mit einer Düse (24) ausgestattet ist, die im Verhältnis zur Längsmittelebene des besagten flexiblen Wischgummis (6) seitlich von der Lippe (7) des flexiblen Wischgummis (6) versetzt ist, **dadurch gekennzeichnet, dass** die Achse der Düse (24) in Richtung der Lippe (7) des Wischgummis (6) gerichtet ist, um die Waschflüssigkeit auf die Lippe (7) des Wischgummis (6) zu leiten, wenn sich diese beim Wischen der Glasfläche (5) in der Stopp-Position vor der Umkehr in die andere Richtung befindet.

2. Scheibenwischerblatt (1) nach Anspruch 1, **dadurch gekennzeichnet, dass** die Schutzkappe (19) zwei im Verhältnis zur Mittelebene der Lippe des Wischblattes asymmetrische Bereiche (30) (31) umfasst.

3. Scheibenwischerblatt (1) nach Anspruch 2, **dadurch gekennzeichnet, dass** sich der Bereich (30) der Schutzkappe (19), auf dem sich die Düse (24) befindet, bis in die Umgebung der Lippe (7) des Wischgummis (6) erstreckt.

4. Scheibenwischerblatt (1) nach irgendeinem der Ansprüche 1 bis 3, **dadurch gekennzeichnet, dass** der Anschluss (28) vorsteht, sodass er über den Grund der Schutzkappe (19) hinausragt.

5. Scheibenwischerblatt (1) nach Anspruch 4, **dadurch gekennzeichnet, dass** der Anschluss (28) in einem Stück mit der Schutzkappe (19) gebildet wird.

6. Scheibenwischerblatt (1) nach irgendeinem der Ansprüche 1 bis 5, **dadurch gekennzeichnet, dass** sich die Düse (24) vollkommen im Inneren der Leitung (23) befindet.

7. Scheibenwischerblatt (1) nach irgendeinem der Ansprüche 1 bis 6, **dadurch gekennzeichnet, dass** die Leitung (23), in der die Düse (24) aufgenommen wird, eine Fase (29) aufweist, die zum Ausgang hin ausgestellt ist, und auf der Seite (19c) des Bereichs (30) zutage tritt.

8. Wasch- und Wischanlage, **dadurch gekennzeichnet, dass** sie zumindest ein Scheibenwischerblatt (1) für eine Glasfläche (5) nach Anspruch 1 bis 7 umfasst.

9. Kraftfahrzeug, **dadurch gekennzeichnet, dass** es zumindest eine Wasch- und Wischanlage für eine Glasfläche (5) nach Anspruch 8 umfasst.

## Claims

1. Wiper arm (1) for a motor vehicle, comprising an elongate flexible blade (6), at least one end of the blade (6) being covered by a cap (19) that integrates a conduit (23) equipped with a nozzle (24) offset on the side of the lip (7) of the flexible blade (6) with respect to the longitudinal mid-plane of said flexible blade (6), **characterised in that** the axis of the nozzle (24) is oriented in the direction of the lip (7) of the blade (6) so as to direct the washing fluid onto the lip (7) of the blade (6) when the latter is in a stopped position, before reversing when the glazed surface (5) is wiped.

2. Wiper arm (1) according to claim 1, **characterised in that** the cap (19) comprises two arms (30) (31) asymmetric with respect to the mid-plane of the blade lip.

3. Wiper arm (1) according to claim 2, **characterised in that** the arm (30) of the cap (19) carrying the nozzle (24) is extended to close to the lip (7) of the blade (6)

4. Wiper arm(1) according to any one of claims 1 to 3, **characterised in that** the coupling (28) projects so as to project beyond the bottom of the cap (19).

5. Wiper arm (1) according to claim 4, **characterised in that** the coupling (28) is made in one piece with the cap (19).

6. Wiper arm (1) according to any one of claims 1 to 5, **characterised in that** nozzle (24) is completely situated inside the conduit (23).

7. Wiper arm (1) according to any one of claims 1 to 6, **characterised in that** the conduit (23) receiving the nozzle (24) comprises a bevel (29) splayed towards the outlet and fitting flush with the side (19c) of the arm (30).

8. Washing and wiping device, **characterised in that** it comprises at least one wiper arm (1) for a glazed surface (5) according to claims 1 to 7.

9. Motor vehicle, **characterised in that** it comprises at least one device for washing and wiping a glazed surface (5) according to claim 8.
